# EUROPÄISCHE PATENTSCHRIFT

(11) **EP 2 131 114 B1**
(45) Veröffentlichungstag und Bekanntmachung des Hinweises auf die Patenterteilung: **28.07.2010**
(21) Anmeldenummer: 09156181.1
(22) Anmeldetag: 25.03.2009
(51) Int. Cl.: F24F 13/02, F16L 9/00, F16L 11/15

(54) **Kunststoffwellrohr mit einem abgeflachten Querschnitt**
Plastic corrugated pipe with a flattened cross-section
Tube ondulé en plastique doté d'une section transversale aplatie

(30) Priorität: 03.06.2008 DE 102008002186
(43) Veröffentlichungstag der Anmeldung: 09.12.2009
(73) Patentinhaber: Centrotherm Systemtechnik GmbH, 59929 Brilon (DE)
(72) Erfinder: Wülbeck, Norbert, 59929, Brilon (DE); Hohmann, Thomas, 34431, Marsberg (DE)
(74) Vertreter: Zenz

(56) Entgegenhaltungen:
- WO-A-2004/001298
- DE-U1-202005 005 056
- DE-U1-202005 007 835

## Beschreibung

Die Erfindung bezieht sich auf ein Kunststoffrohr zum Weiterleiten eines Fluids für Klima- oder Lüftungsanlagen, insbesondere zur horizontalen Verlegung innerhalb eines Estrichs eines Gebäudes, wobei das Kunststoffrohr aus einem flexiblen Wellrohr mit einem abgeflachten Querschnitt und einem mit den Innenflächen der Wellrohr-Täler verbundenen Innenschlauch mit einer glatten Innenfläche besteht.

Ein Kunststoffrohr der eingangs genannten Art ist beispielsweise aus der Gebrauchsmusterschrift DE 20 2005 005 056 U1 bekannt. Die Gebrauchsmusterschrift geht von einem Stand der Technik aus, der einerseits Wellrohre mit einem kreisförmigen Querschnitt und andererseits Metallrohre mit einem ovalen Querschnitt umfasst, und stellt sich die Aufgabe, ein Kunststoffrohr zu schaffen, dass über gute Strömungseigenschaften verfügt, kostengünstig ist und größere äußere Belastungen aufnehmen kann. Es wird dann vorgeschlagen, ein Wellrohr mit einem ovalen Querschnitt im Verbund mit einem eine glatte Innenwandung bildenden Innenschlauch herzustellen, wobei unter einem ovalen Querschnitt ein nicht kreisförmiger Querschnitt mit einer großen Achse und einer senkrecht hierauf stehenden kleinen Achse zu verstehen sein soll, der symmetrisch zu der großen Achse und zu der kleinen Achse ausgebildet ist und keine konkaven Wandabschnitte aufweist.

Aus der Gebrauchsmusterschrift DE 20 2005 007 835 U1 ist ebenfalls ein Rohr für die Luftführung in Be- und Entlüftungseinrichtungen bekannt, welches doppelwandig aus einem äußeren Wellrohr und einem inneren glatten Rohr gebildet ist, die einen im Wesentlichen rechteckförmigen oder ovalen Strömungsquerschnitt aufweisen.

Ausgehend von diesem Stand der Technik liegt der Erfindung die Aufgabe zugrunde, ein Kunststoffrohr der eingangs genannten Art zu schaffen, welches eine maximale mechanische Stabilität gegenüber von einer Oberseite her einwirkenden Druckbelastungen bei einer im Wesentlichen ebenen Auflage und einen minimalen Strömungswiderstand erzielt.

Diese Aufgabe wird erfindungsgemäß durch ein Kunststoffrohr mit den Merkmalen des Anspruchs 1 gelöst. Vorteilhafte und/oder bevorzugte Weiterbildungen der Erfindung sind in den Unteransprüchen gekennzeichnet.

Das erfindungsgemäße Kunststoffrohr zum Weiterleiten eines Fluids für Klima- oder Lüftungsanlagen besteht aus einem flexiblen Wellrohr und einem mit den Innenflächen der Wellrohr-Täler verbundenen Innenschlauch mit einer ebenen, glatten Innenfläche. Das flexible Wellrohr weist einen zu einer Symmetrieebene symmetrisch ausgebildeten Querschnitt auf, dessen Breiteninnenabmessung quer zur Symmetrieebene größer als dessen Höheninnenabmessung in der Symmetrieebene ist und dessen Höhenaußenabmessung ein vorgegebenes Maß nicht überschreitet. Das vorgegebene Maß hängt beispielsweise von der Dicke des Estrichs ab, in dem das Rohr verlegt werden soll. Der Querschnitt wird von einer ebenen Bodenwandung und einer gegenüberliegenden bogenförmig nach außen gewölbten Deckenwandung und dazwischen angeordneten Seitenwandungen begrenzt, wobei der Radius der Krümmung der Deckenwandung mindestens dem 1,5-fachen, aber maximal dem Fünffachen der Höheninnenabmessung entspricht. Die Bodenwandung, die Seitenwandungen und die Dekkenwandung gehen im Querschnitt bogenförmig derart ineinander über, dass sich in den Übergängen zwischen der Bodenwandung und den Seitenwandungen sowie zwischen den Seitenwandungen und der Deckenwandung Krümmungsinnenradien ergeben, die mindestens ein Sechstel der Höheninnenabmessung betragen. Durch diese konstruktiven Randbedingungen ergibt sich ein Rohrquerschnitt, der bei einigen Ausführungsformen an eine Brotform erinnert. Die Krümmungsinnenradien der Übergänge zwischen der Bodenwandung und den Seitenwandungen einerseits und zwischen den Seitenwandungen und der Deckenwandung andererseits können unterschiedlich sein. Ab einer gewissen Größe dieser Krümmungsinnenradien ergibt es sich, dass die bogenförmigen Übergänge von der Bodenwandung zur Seitenwandung und von der Seitenwandung zur Deckenwandung aufeinandertreffen und ineinander übergehen, so dass die Seitenwandung praktisch auf die Linie des Zusammentreffens der oberen und unteren Krümmung reduziert wird.

Es hat sich gezeigt, dass die erfindungsgemäße Ausbildung des Kunststoffrohrs unter der Randbedingung einer im Wesentlichen ebenen Auflage und Druckeinwirkungen von der Oberseite (die selbstverständlich auch Querkräfte umfassen können), das heißt, die Kombination des erfindungsgemäßen Querschnittsprofils mit der glatten Innenfläche des Innenschlauchs, zu einer optimalen Kombination eines geringen Strömungswiderstands mit einer hohen mechanischen Stabilität führt.

Bei einer bevorzugten Weiterbildung entspricht der Radius der Krümmung der Deckenwandung mindestens dem Doppelten, aber maximal dem Dreifachen der Höheninnenabmessung und betragen die Krümmungsinnenradien in den Übergängen zwischen der Bodenwandung und den Seitenwandungen sowie zwischen den Seitenwandungen und der Deckenwandung mindestens ein Viertel der Höheninnenabmessung. Bei einer Ausführungsform, bei der das vorgegebene Maß, dass die Höhenaußenabmessung nicht überschreitet, zwischen 50 und 60 mm und die Höheninnenabmessung zwischen 40 und 50 mm liegt (was einer Rohrwandungsdicke von etwa 5 mm entspricht), liegt der Radius der Krümmung der Deckenwandung zwischen 80 mm und 150 mm und liegen die Krümmungsinnenradien in den Übergängen zwischen den Wandungen bei mindestens 10 mm.

Grundsätzlich gilt, dass bei einer geringeren Wandungsdicke des Wellrohrs eine etwas stärkere Krümmung der Deckenwandung zu wählen ist, um eine vergleichbare Stabilität zu erreichen. Größere Krümmungsinnenradien in den Übergängen zwischen den Wandungen führen (bei ansonsten gleichen Außenabmessungen) zu einem geringeren Strömungsquerschnitt, haben aber auch einen Einfluss auf die Stabilität. Bei den erfindungsgemäßen Verhältnissen wird hier ein Optimum erreicht. Bei einigen Ausführungsformen ist der Krümmungsradius in den Übergängen zwischen der Bodenwandung und den Seitenwandungen geringer als der Krümmungsradius in den Übergängen zwischen den Seitenwandungen und der Deckenwandung. Die bogenförmigen Übergänge zwischen den Wandungen brauchen zudem nicht kreisbogenförmig zu sein, wobei bei einer nicht-kreisförmigen Ausbildung der oben genannte Krümmungsinnenradius dem minimalen Innenradius entspricht.

Eine bevorzugte Weiterbildung des erfindungsgemäßen Kunststoffrohrs ist dadurch gekennzeichnet, dass der Innenschlauch aus einem antistatischen Material besteht und/oder dessen Innenfläche derart beschichtet oder behandelt ist, dass sie antistatische Eigenschaften aufweist. Dies verringert den Strömungswiderstand und vermeidet darüber hinaus unerwünschte elektrische Aufladungen.

Eine andere bevorzugte Weiterbildung der Erfindung ist dadurch gekennzeichnet, dass der Innenschlauch aus einem antibakteriell wirkenden Material besteht und/oder dessen Innenfläche derart beschichtet oder behandelt ist, dass sie antibakterielle Eigenschaften aufweist. Dies ist insbesondere bei der Verwendung der Kunststoffrohre in Lüftungsanlagen von Gebäuden sinnvoll, sofern es aufgrund der Feuchtigkeit des transportierten Fluids zu einer Feuchtigkeitsabscheidung kommen kann, welche - in Verbindung mit Verunreinigungen - das Wachstum von Bakterien begünstigt.

Nachfolgend wird die Erfindung anhand von in den Zeichnungen dargestellten bevorzugten Ausführungsformen näher beschrieben. In den Zeichnungen zeigen:
Figur 1 schematische Schnittansichten einer ersten Ausführungsform des erfindungsgemäßen Kunststoffrohrs;
Figur 2 schematische Schnittansichten einer zweiten Ausführungsform des erfindungsgemäßen Kunststoffrohrs; und
Figur 3 schematische Schnittansichten einer dritten Ausführungsform des erfindungsgemäßen Kunststoffrohrs.

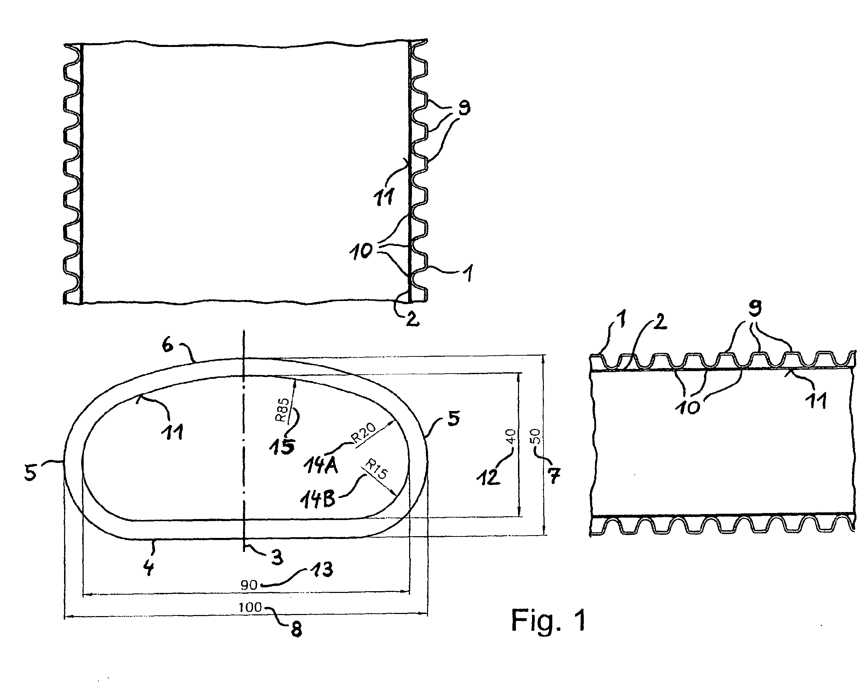

Figur 1 zeigt eine schematische Querschnittsansicht einer ersten Ausführungsform des erfindungsgemäßen Kunststoffrohrs mit einer vertikalen Außenabmessung 7 von 50 mm und einer horizontalen Außenabmessung 8 von 100 mm. Die Symmetrieebene ist durch eine Strich-Punkt-Linie 3 dargestellt. Bei dieser Ausführungsform geht die ebene Bodenwandung 4 bei einem Krümmungsinnenradius 14B von 15 mm in die Seitenwandungen 5, und diese bei einem Krümmungsradius 14A von 20 mm in die Deckenwandung 6 über, wobei die Deckenwandung 6 einen Krümmungsradius 15 von 85 mm aufweist. Der Übergang zwischen Boden- und Seitenwandung schließt sich unmittelbar an den Übergang zwischen Seiten- und Deckenwandung an, so dass praktisch keine Fläche der Seitenwandung 5 verbleibt.

Über und rechts neben der Profildarstellung sind Schnittansichten in Längsrichtung durch das Rohr gezeigt. Dort erkennt man den doppelwandigen Aufbau aus einem äußeren Wellrohr 1 und einem Innenschlauch 2, wobei der Innenschlauch 2 mit den Innenflächen des Wellrohrs 1 verbunden ist. Bei dem in Figur 1 gezeigten Ausführungsbeispiel handelt es sich bei dem Wellrohr um ein Wellrohr mit parallelen Wellenbergen 9 und -tälern 10. Es sind aber im Rahmen des Erfindungsgedankens auch Ausführungsformen mit spiralförmigen Wellentälern denkbar. Darüber hinaus kann das Längsprofil der Wellrohre von dem in Figur 1 gezeigten Profil abweichen. Figur 1 zeigt ein bevorzugtes Wellrohr mit abgeflachten Wellenbergen 9; es sind aber beispielsweise auch Wellrohre denkbar, bei denen die Wellentäler 10 und -berge 9 symmetrisch sind.

Bei den bevorzugten Ausführungsformen des erfindungsgemäßen Profils ist der Krümmungsradius 14A der Übergänge zwischen der Deckenwandung 6 und den Seitenwandungen 5 größer, vorzugsweise etwa 30 % Prozent bis 70 % größer als der Krümmungsinnenradius 14B der Übergänge zwischen der Bodenwandung 4 und den Seitenwandungen 5. Dies optimiert die zum Teil widerstreitenden Anforderungen an die mechanische Stabilität einerseits und den geringen Strömungswiderstand andererseits. Der geringere Krümmungsradius im Bereich der Bodenwandung schafft durch ein Nach-Außen-Versetzen der Ecken einen größeren Strömungsquerschnitt, und der größere Krümmungsradius 14A beim Übergang zur Deckenwandung dient der besseren Abstützung dieser Wandung.

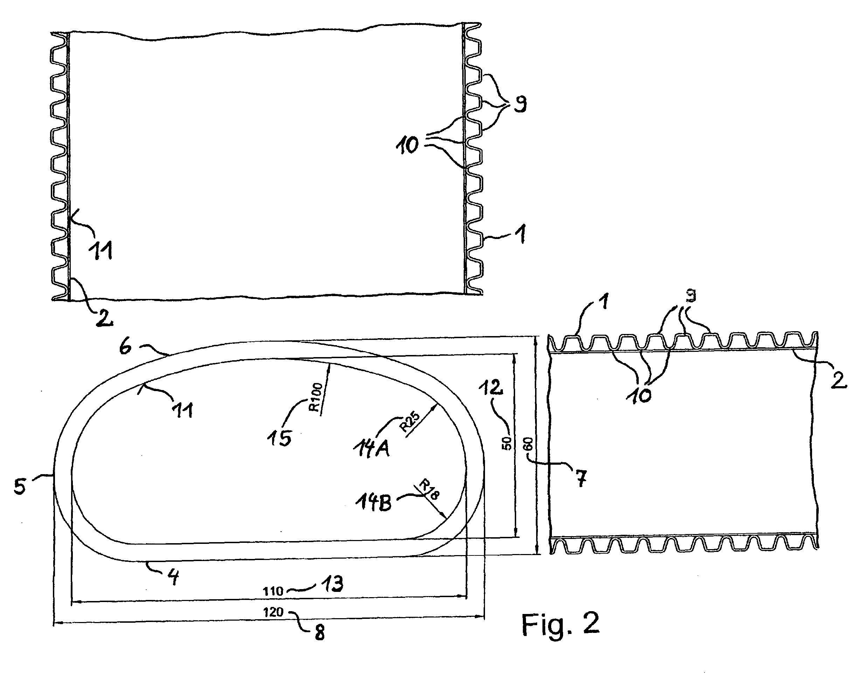

Figur 2 zeigt eine zweite Ausführungsform des erfindungsgemäßen Kunststoffrohrs mit größeren Abmessungen; die Höhe 7 des verlegten Rohres beträgt hier 60 mm und dessen Breite 8 beträgt 120 mm. Bei einer gleichbleibenden Wandungsdicke von etwa 5 mm ergibt sich somit eine Höheninnenabmessung 12 von 50 mm und eine Breiteninnenabmessung 13 von 110 mm. Auch bei dieser Ausführungsform schließt sich der Übergang zwischen der Bodenwandung 4 und den Seitenwandungen 5 nahezu unmittelbar an den Übergang zwischen den Seitenwandungen 5 und der Deckenwandung 6 an, so dass als Seitenwandung 5 praktisch nur ein schmaler Streifen verbleibt. Auch im Übrigen entspricht die Ausführungsform gemäß Figur 2 derjenigen von Figur 1.

Während die Ausführungsform nach Figur 1 für einen Volumenstrom von 25 m³/h bei einer Strömungsgeschwindigkeit von 2,26 m/s konzipiert ist, ist die Ausführungsform nach Figur 2 für einen Volumenstrom von 52,2 m³/h bei einer Strömungsgeschwindigkeit von 2,9 m/s vorgesehen.

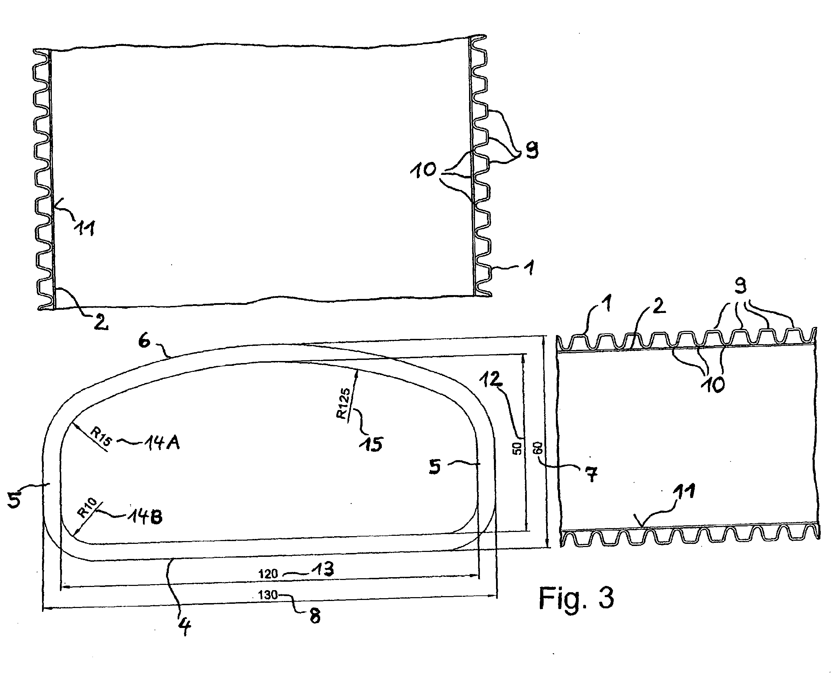

Figur 3 zeigt schematische Schnittansichten einer dritten Ausführungsform des erfindungsgemäßen Kunststoffrohrs, welche für einen Volumenstrom von 55 m³/h bei einer Strömungsgeschwindigkeit von 2,9 m/s konzipiert ist. Bei dieser Ausführungsform, welche dieselbe Höhenaußenabmessung 7 von 60 mm wie die Ausführungsform gemäß Figur 2 aufweist, wurde der Strömungsquerschnitt dadurch vergrößert, dass eine größere Breitenabmessung von außen 130 mm und innen 120 mm gewählt wurde und darüber hinaus die Krümmungsinnenradien 14A, 14B der Übergänge zwischen den Boden-, Seiten- und Deckenwandungen verringert wurden, so dass die Ecken nach außen gerückt sind. Auch der Radius 15 der Krümmung der Deckenwandung wurde gegenüber der Ausführungsform gemäß Figur 2 vergrößert. Allerdings geht der vergrößerte Strömungsquerschnitt teilweise zu Lasten der mechanischen Stabilität gegenüber von oben einwirkenden mechanischen Druckkräften, wobei die gezeigte Ausführungsform noch im Bereich der erfindungsgemäßen Optimierung verbleibt.

Der Innenschlauch besteht bei einer bevorzugten Ausführungsform aus Polyethylen. Es sind aber auch andere Kunststoffmaterialien denkbar, beispielsweise Polypropylen, wobei die Wahl des Kunststoffmaterials von den Kosten und den weiteren Anforderungen, beispielsweise für das Recycling, abhängig ist.

Der Innenschlauch ist dünn und flexibel. Seine Dicke ist bei bevorzugten Ausführungsformen kleiner als 1 mm, vorzugsweise kleiner als 0,3 mm. Bei einem bevorzugten Ausführungsbeispiel ist die Dicke des Innenschlauchs etwa 0,1 mm.

Das äußere Wellrohr besteht beispielsweise ebenfalls aus Polyethylen oder Polypropylen. Dem Kunststoff sind Beimischungen zugesetzt, die seiner Einfärbung, einer erhöhten Widerstandsfähigkeit gegen Licht und UV-Strahlung und dem verbesserten Brandschutz dienen. Beispielsweise ist das Kunststoffmaterial schwarz eingefärbt.

Die Herstellung der erfindungsgemäßen Kunststoffrohre erfolgt vorzugsweise durch Koextrusion des äußeren Wellrohrs und des glatten Innenschlauchs derart, dass die Außenflächen des Innenschlauchs mit den Innenflächen der Wellrohr-Täler fest verbunden werden. Die Materialien des Wellrohrs einerseits und des Innenschlauchs andererseits sowie die Verfahrensführung beim Extrudieren sind dabei so gewählt, dass es einerseits zu einer ausreichend festen Verbindung zwischen den beiden Bestandteilen kommt und andererseits der Innenschlauch nicht gestaucht wird, so dass seine Innenfläche glatt und eben bleibt. Es ist auch denkbar, dass der Innenschlauch so mit dem äußeren Wellrohr verbunden wird, dass er unter einer Zugspannung steht, die für eine Glättung der Innenfläche sorgt.

Bei alternativen Ausführungsformen des erfindungsgemäßen Kunststoffrohrs ist auch ein Verbund denkbar, der zusätzlich einen äußeren glatten Schlauch auf den Außenseiten des Wellrohrs umfasst. Hier ist beispielsweise eine Ausführungsform denkbar, die eine verbesserte Wärmeisolation zwischen dem Innenraum des Rohres und der Umgebung zur Verfügung stellt. Hierfür wäre es zusätzlich denkbar, dass weitere Schichten zur Wärmeisolation außerhalb des Wellrohrs aufgebracht sind. Darüber hinaus ist es auch denkbar, dass der Innenschlauch mehrschichtig aufgebaut ist. Auch ist es denkbar, dass der Innenschlauch mittels einer Klebstoffschicht mit dem Wellrohr verbunden wird.

Bei einer bevorzugten Ausführungsform ist der Innenschlauch so ausgebildet, dass seine Innenseiten antistatische und/oder antibakterielle Eigenschaften aufweisen. Der Schlauch kann beispielsweise aus einem antistatischen Material bestehen, beispielsweise leitfähige Partikel enthalten. Auch können die Innenflächen derart beschichtet oder behandelt sein, dass sie antistatische Eigenschaften aufweisen. Darüber hinaus kann der Innenschlauch aus einem antibakteriell wirkenden Material bestehen oder seine Innenflächen können derart beschichtet oder behandelt sein, dass sie antibakterielle Eigenschaften aufweisen. Beispielsweise könnte ein Silberpulver oder Silbergranulat zusammen mit dem Kunststoffmaterial extrudiert werden. Es könnten auch die erforderlichen Silberionen durch Silberverbindungen in das Kunststoffmaterial eingebracht oder in Form einer Beschichtung auf die Innenseiten aufgebracht werden.

Das erfindungsgemäße Kunststoffrohr wird vorzugsweise für Lüftungskanäle in Gebäuden verwendet, die innerhalb des Estrichs verlegt werden. Hierzu werden die erfindungsgemäßen Kunststoffrohre zusammen mit entsprechend angepassten Formteilen, welche Anschlüsse und Bögen ermöglichen, zunächst auf einem ebenen Boden verlegt und fixiert. Anschließend wird der Estrich vergossen, der die Kunststoffrohre dabei umschließt.

## Patentansprüche

1. Kunststoffrohr zum Weiterleiten eines Fluids für Klima- oder Lüftungsanlagen, insbesondere zur horizontalen Verlegung innerhalb eines Estrichs, bestehend aus
einem flexiblen Wellrohr (1) mit einem zu einer Symmetrieebene (3) symmetrisch ausgebildeten Querschnitt, dessen Breiteninnenabmessung (13) quer zur Symmetrieebene größer als dessen Höheninnenabmessung (12) in der Symmetrieebene ist und dessen Höhenaußenabmessung (7) ein vorgegebenes Maß nicht überschreitet, und
einem mit den Innenflächen der Wellrohr-Täler (10) verbundenen Innenschlauch (2) mit einer ebenen, glatten Innenfläche (11),
**dadurch gekennzeichnet, dass** der Querschnitt von einer ebenen Bodenwandung (4) und einer gegenüberliegenden bogenförmig nach außen gewölbten Deckenwandung (6) und dazwischen angeordneten Seitenwandungen (5) begrenzt wird, wobei der Radius (15) der Krümmung der Deckenwandung (6) mindestens dem 1,5-fachen, aber maximal dem Fünffachen der Höheninnenabmessung (12) entspricht,
wobei die Bodenwandung (4), die Seitenwandungen (5) und die Deckenwandung (6) im Querschnitt bogenförmig derart ineinander übergehen, dass sich in den Übergängen zwischen der Bodenwandung (4) und den Seitenwandungen (5) sowie zwischen den Seitenwandungen (5) und der Deckenwandung (6) Krümmungsinnenradien (14A, 14B) ergeben, die mindestens ein Sechstel der Höheninnenabmessung betragen.

2. Kunststoffrohr nach Anspruch 1, **dadurch gekennzeichnet, dass** der Radius (15) der Krümmung der Deckenwandung (6) mindestens dem Doppelten, aber maximal dem Dreifachen der Höheninnenabmessung (12) entspricht und die Krümmungsinnenradien (14A, 14B) in den Übergängen zwischen der Bodenwandung (4) und den Seitenwandungen (5) sowie zwischen den Seitenwandungen (5) und der Deckenwandung(6) mindestens ein Viertel der Höheninnenabmessung (12) betragen.

3. Kunststoffrohr nach Anspruch 2, **dadurch gekennzeichnet, dass** das vorgegebene Maß, dass die Höhenaußenabmessung (7) nicht überschreitet, zwischen 50 und 60 mm, und die Höheninnenabmessung (12) zwischen 40 und 50 mm liegt, wobei der Radius (15) der Krümmung der Deckenwandung zwischen 80 mm und 150 mm liegt und die Krümmungsinnenradien in den Übergängen zwischen den Wandungen (4, 5, 6) mindestens 10 mm betragen.

4. Kunststoffrohr nach einem der Ansprüche 1 - 3, **dadurch gekennzeichnet, dass** der Innenschlauch (2) aus einem antistatischen Material besteht und/oder dessen Innenfläche (11) derart beschichtet oder behandelt ist, dass sie antistatische Eigenschaften aufweist.

5. Kunststoffrohr nach einem der Ansprüche 1 - 4, **dadurch gekennzeichnet, dass** der Innenschlauch (2) aus einem antibakteriell wirkenden Material besteht und/oder dessen Innenfläche (11) derart beschichtet oder behandelt ist, dass sie antibakterielle Eigenschaften aufweist.

## Claims

1. A plastic pipe for conducting a fluid for air conditioning or ventilating installations, particularly for laying horizontally within a screed, consisting of a flexible corrugated pipe (1) with a cross section which is symmetrical with respect to a plane of symmetry (3) and whose internal breadth dimension (13) transverse to the plane of symmetry is greater than its internal height dimension (12) in the plane of symmetry and whose external height dimension (7) does not exceed a predetermined value, and an inner tube (2), which is connected to the inner surfaces of the corrugated pipe valleys (10), with a flat inner surface (11), **characterised in that** the cross section is defined by a flat base wall (4) and an opposed, outwardly arcuately domed top wall (6) and side walls (5) arranged between them, wherein the radius (15) of the curvature of the top wall (6) corresponds at least 1.5 times, but at most five times, the internal height dimension (12), wherein the base wall (4), the side walls (5) and the top wall (6) merge arcuately into one another in cross section such that in the transitions between the base wall (4) and the side walls (5) and between the side walls (5) and the top wall (6), internal radii of curvature (14A, 14B) are produced, which are at least one sixth of the internal height dimension.

2. A plastic pipe as claimed in claim 1, **characterised in that** the radius (15) of the curvature of the top wall (6) corresponds to at least twice but at most three times the internal height dimension (12) and the internal radii of curvature (14A, 14B) in the transitions between the base wall (4) and the side walls (5) and between the side walls (5) and the top wall (6) are at least one quarter of the internal height dimension (12).

3. The plastic pipe as claimed in claim 2, **characterised in that** the predetermined value, which the external height dimension (7) does not exceed, is between 50mm and 60mm and the internal height dimension (12) is between 40mm and 50mm, whereby the radius (15) of the curvature of the top wall is between 80mm and 150mm and the radii of internal curvature in the transitions between the walls (4, 5, 6) are at least 10mm.

4. A plastic pipe as claimed in one of claims 1 to 3, **characterised in that** the inner tube (2) consists of an anti-static material and/or its inner surface (11) is so coated or treated that it exhibits anti-static properties.

5. A plastic pipe as claimed in one of claims 1 to 4, **characterised in that** the inner tube (2) consists of a material with an anti-bacterial action and/or its inner surface (11) is so coated or treated that it exhibits anti-bacterial properties.

## Revendications

1. Tube en matériau synthétique pour le transfert d'un fluide pour installations de climatisation et de ventilation, en particulier pour installation horizontale à l'intérieur d'une chape, constitué des éléments suivants :
un tube ondulé flexible (1) d'une section transversale formée symétriquement par rapport à un plan de symétrie (3), dont la largeur en dimension interne (13) est, transversalement au plan de symétrie, supérieure à la hauteur en dimension interne (12) dans le plan de symétrie et dont la hauteur en dimension externe (7) ne dépasse pas une mesure prédéfinie, et
un tuyau interne (2) raccordé aux surfaces internes des creux (10) du tube ondulé avec une surface interne (11) plane et lisse,
**caractérisé en ce que** la section transversale est délimitée par une paroi de fond (4) plane, une paroi de recouvrement (6) opposée bombée en forme d'arc vers l'extérieur et des parois latérales (5) agencées entre elles, dans lequel le rayon (15) de la courbure de la paroi de recouvrement (6) correspondant à au moins 1,5 fois, mais au maximum à cinq fois, la hauteur en dimension interne (12), dans lequel la paroi de fond (4), les parois latérales (5) et la paroi de recouvrement (6) se fondent l'une dans l'autre en forme d'arc en section transversale de sorte qu'il résulte dans les transitions entre la paroi de fond (4) et les parois latérales (5), ainsi qu'entre les parois latérales (5) et la paroi de recouvrement (6), des rayons internes de courbure (14A, 14B) qui atteignent au moins un sixième de la hauteur en dimension interne.

2. Tube en matériau synthétique selon la revendication 1, **caractérisé en ce que** le rayon (15) de la courbure de la paroi de recouvrement (6) correspond au moins au double, mais au maximum au triple, de la hauteur en dimension interne (12) et **en ce que** les rayons internes de courbure (14A, 14B) atteignent au moins un quart de la hauteur en dimension interne (12) dans les transitions entre la paroi de fond (4) et les parois latérales (5) et entre les parois latérales (5) et la paroi de recouvrement (6).

3. Tube en matériau synthétique selon la revendication 2, **caractérisé en ce que** la mesure prédéfinie, qui ne dépasse pas la hauteur en dimension externe (7), se situe entre 50 et 60 mm et la hauteur en dimension interne (12) se situe entre 40 et 50 mm, dans lequel le rayon (15) de la courbure de la paroi de recouvrement se situe entre 80 mm et 150 mm et les rayons internes de courbure atteignent au moins 10 mm dans les transitions entre les parois (4, 5, 6).

4. Tube en matériau synthétique selon l'une quelconque des revendications 1 à 3, **caractérisé en ce que** le tuyau interne (2) est constitué d'un matériau antistatique et/ou sa surface interne (11) est revêtue ou traitée de manière à présenter des propriétés antistatiques.

5. Tube en matériau synthétique selon l'une quelconque des revendications 1 à 4, **caractérisé en ce que** le tuyau interne (2) est constitué d'un matériau à action antibactérienne et/ou sa surface interne (11) est revêtue ou traitée de manière à présenter des propriétés antibactériennes.
